# FASCICULE DE BREVET EUROPEEN

(11) **EP 3 253 970 B1**
(45) Date de publication et mention de la délivrance du brevet: **29.04.2020**
(21) Numéro de dépôt: 16705977.3
(22) Date de dépôt: 04.02.2016
(51) Int. Cl.: F04D 29/02, F01D 5/28, F04D 29/32, F04D 29/38, F04D 29/54

(54) **AUBE DE SOUFFLANTE**
VENTILATORSCHAUFEL
FAN BLADE

(30) Priorité: 06.02.2015 FR 1550965
(43) Date de publication de la demande: 13.12.2017
(73) Titulaire: SAFRAN AIRCRAFT ENGINES, 75015 Paris (FR)
(72) Inventeur: MARTIN, Guillaume, Olivier, Vartan, 77550 Moissy-Cramayel (FR); BOISSON, Alexandre Bernard, Marie, 77550 Moissy-Cramayel (FR); FIGEUREU, Claire Marie, 77550 Moissy-Cramayel (FR); ALLAIR, Frédéric Alain Edouard, 77550 Moissy-Cramayel (FR); LANCIEN, Théa Claire, 77550 Moissy-Cramayel (FR)
(74) Mandataire: Regimbeau
(86) Numéro de dépôt international: PCT/FR2016/050234
(87) Numéro de publication internationale: WO 2016/124861

(56) Documents cités:
- EP-A2- 1 070 849
- WO-A1-2013/178914
- CN-A- 101 936 296
- US-A- 2 830 753

## Description

### DOMAINE TECHNIQUE GENERAL

La présente invention concerne une aube de soufflante.

### ETAT DE L'ART

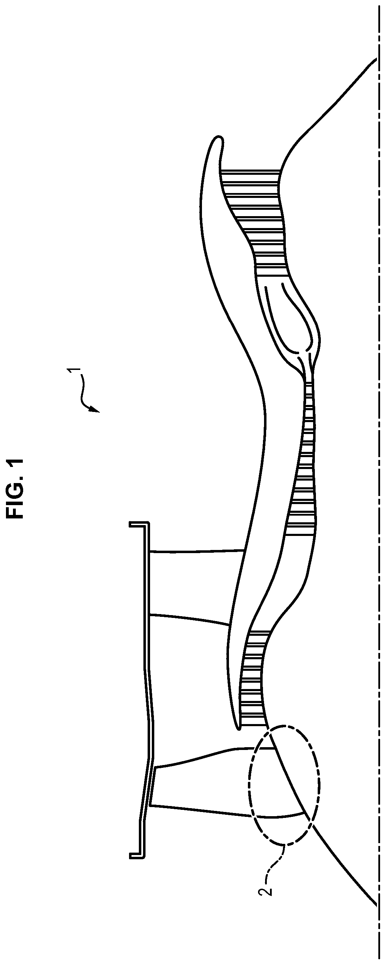

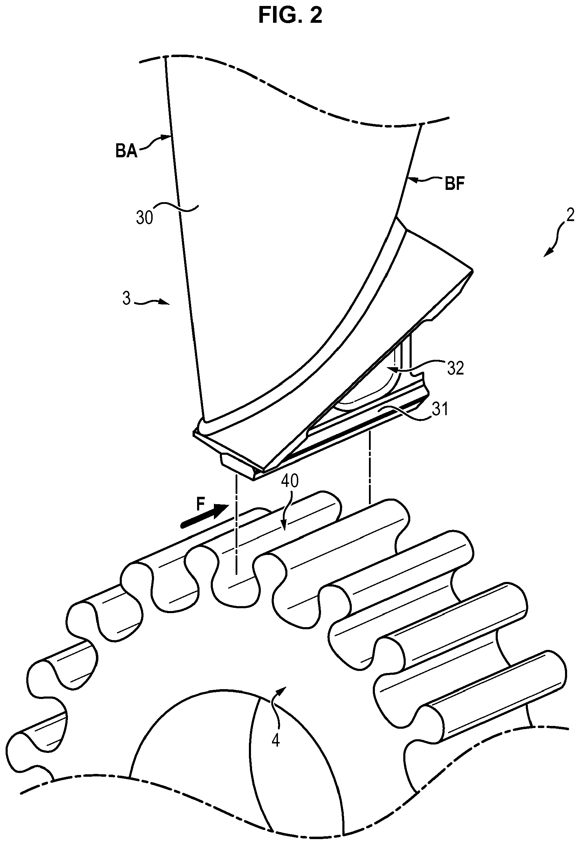

Une soufflante (ou « fan »), est une pièce tournante de grand diamètre en entrée d'une turbomachine à double flux (voir gauche de la **figure 1**) formée d'un moyeu sensiblement conique (le « spinner ») sur lequel sont fixées des aubes s'étendant radialement, telle que visible sur la **figure 2****.** La soufflante comprime une grande masse d'air froid, partiellement injectée dans le compresseur, le reste formant un écoulement cylindrique enveloppant le moteur et dirigé vers l'arrière pour créer de la poussée.

Un axe de développement pour améliorer le rendement des futures turbomachines est l'augmentation de leur taux de dilution, c'est-à-dire le rapport entre la masse d'air du flux froid (c'est-à-dire celui ne passant que par la soufflante) et celle du flux chaud (celui traversant la soufflante et qui est injecté dans le compresseur et chauffé dans la chambre de combustion).

Pour cela, une des pistes est la réduction du rapport moyeu, c'est-à-dire le rapport entre le rayon bord d'attaque de la soufflante mesuré à l'intersection avec la veine au moyeu, et le rayon mesuré au carter à la même station axiale. A iso-diamètre de soufflante, cela consiste ainsi en une réduction du diamètre du moyeu, ce qui entraine aujourd'hui de nombreuses problématiques mécaniques et aérodynamiques.

En effet, le travail de la soufflante est réalisé par la déviation du fluide. Pour comprimer le fluide, deux options existent :
- Jouer sur la vitesse tangentielle de l'aube ;
- Cambrer les profils.

Sur les aubes à faible rapport de moyeu, la veine intérieure (celle qui correspond au flux d'air injecté dans le compresseur) est très proche de l'axe moteur. Sa vitesse tangentielle est faible, le travail doit donc être effectué par de la cambrure. Cependant la technologie du composite tissé 3D ne permet pas de rapide variation d'angle. Comme l'on voit sur la figure 2, le pied est conçu droit pour des problématiques de fabrication liées au composite tissé), il n'est pas possible de récupérer le profil de l'aube au niveau de la veine intérieure par un dessin classique.

La cambrure reste donc également limitée.

Il serait souhaitable de disposer d'une nouvelle géométrie d'aube de soufflante qui permette un rendement et des performances maximales sans compliquer la production des aubes ni les fragiliser.

### PRESENTATION DE L'INVENTION

La présente invention propose ainsi une aube selon la revendication 1.

Cette géométrie particulière de la pale permet d'augmenter la cambrure du profil tout en facilitant le raccordement au pied tissé droit de l'aube.

Selon d'autres caractéristiques avantageuses et non limitatives :
- ladite position le long de la corde du profil associée à la flèche maximale correspond à une longueur relative de corde comprise entre 55% et 75%;
- ladite position le long de la corde du profil associée à la flèche maximale correspond à une longueur relative de corde comprise entre 55% et 65% ;
- l'aube est en un matériau composite tissé ;
- l'aube comprend en outre un pied s'étendant axialement, le pied étant relié à la pale via l'échasse.

Selon un deuxième aspect, l'invention concerne une soufflante pour une turbomachine à double flux comprenant au moins une aube selon le premier aspect de l'invention.

Selon d'autres caractéristiques avantageuses et non limitatives :
- la soufflante comprend un disque à partir duquel ladite aube s'étend sensiblement radialement ;
- le pied de l'aube s'insère axialement dans une alvéole du disque ;
- la soufflante comprend une pluralité d'aubes selon le premier aspect de l'invention disposées régulièrement sur une circonférence du disque.

Selon un troisième aspect, l'invention concerne une turbomachine comprenant une soufflante selon le deuxième aspect de l'invention.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
- la figure 1 précédemment décrite représente un exemple de turbomachine ;
- la figure 2 précédemment décrite illustre une soufflante;
- les figures 3a et 3b représentent une aube de soufflante ;
- les figures 4 et 5 comparent chacune un profil d'une pale connue avec un profil d'une pale d'une aube selon l'invention.

### DESCRIPTION DETAILLEE

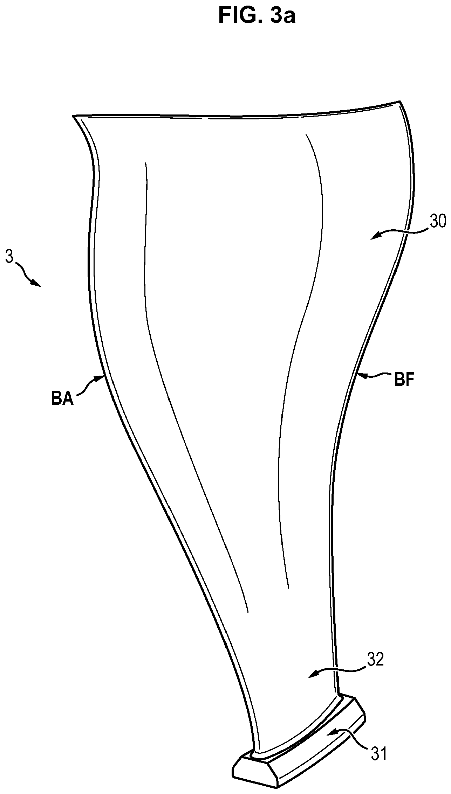

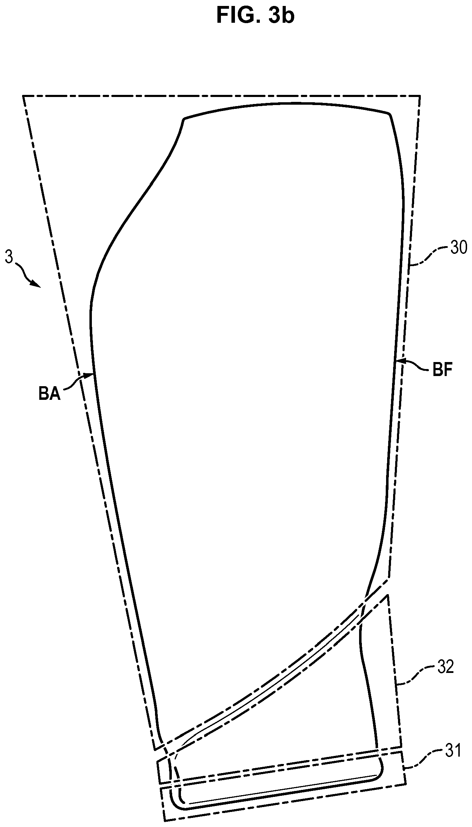

En référence aux **figures 2****,** **3a** **et** **3b****,** la présente aube 3 est une aube d'une soufflante 2 de turbomachine 1 à double flux, constituée de façon connue d'une pale 30, d'une échasse 32 et d'un pied 31 formé par une partie de plus forte épaisseur, par exemple à section en forme de bulbe. L'échasse 32 (en anglais « shank ») est la partie qui assure la continuité entre la pale 30 et le pied 31 de l'aube 3. Cette partie est située sous la veine et n'est donc d'aucune importance pour l'aérodynamique, mais est cruciale du point de vue mécanique car elle va récupérer de fortes contraintes, liées aux forces centrifuges notamment. Le pied 31 est une partie droite (dite « axiale ») qui s'insère par translation dans une alvéole 40 de forme complémentaire d'un disque 4 formant moyeu de la soufflante 2.

On comprend que la pale 30 est au contact du fluide comprimé par la soufflante 2, contrairement à l'échasse 32 qui est « enfouie ». L'échasse est une partie sensiblement plane, fine, et s'étendant selon ladite direction axiale du pied 31. L'échasse a généralement une forme triangulaire en considérant sa section longitudinale dans un plan radial de l'aube, ce plan passant par l'axe de rotation de la soufflante.

La pale 30 présente au moins au voisinage du pied 31 (plus précisément au niveau de l'échasse 32), c'est-à-dire à la base de la pale 30, une géométrie particulière qui va être décrite plus loin.

La présente soufflante 2 est un ensemble de pièces comprenant une plateforme à partir de laquelle s'étendent les pales 30 (cette plateforme peut soit faire partie des aubes, sous la forme de deux demi-plateformes « intégrées » s'étendant des échasses 32 (comme l'on voit sur la figure 2), soit faire partie du moyeu 4 dans lequel les aubes s'insèrent, et dans ce cas elles sont « rapportées »), lesquelles sont avantageusement disposées régulièrement sur la circonférence du moyeu 4. Le terme plateforme est ici interprété au sens large et désigne de façon générale tout élément à partir duquel des pales s'étendant radialement et présentant une paroi contre laquelle l'air circule. On connait aujourd'hui des géométries performantes de plateforme qui sont non-axisymétriques.

On comprendra que la présente soufflante 2 n'est limitée à aucune structure particulière de plateforme, mais on prendra l'exemple particulier d'une plateforme rapportée, c'est-à-dire associée à une aube 3 « sans plateforme » du type de la figure 3b, comprenant comme expliqué une échasse 32 présentant une épaisseur réduite par rapport au reste du pied 31 et un pied 31 s'insérant dans une alvéole d'un disque, afin d'assurer le blocage de l'aube 3.

Les aubes 3 sont préférentiellement en un matériau composite tissé. Le pied 31 est tissé à plat, c'est-à-dire qu'il s'étend axialement. L'homme du métier pourra trouver notamment dans le document EP1526285 des exemples de tels matériaux et de procédés de fabrication d'aubes associés.

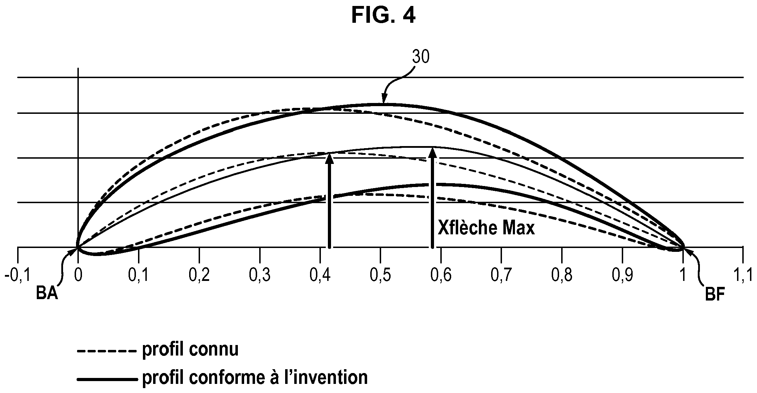

La présente aube 3 se distingue comme expliqué par une géométrique particulière de la pale 30 au niveau de la plateforme, c'est-à-dire au point de jonction avec l'échasse 32 dans l'exemple susmentionné. La **figure 4** représente un détail de deux « coupes » à ce niveau de la pale 30 (on remarque le profil concave-convexe) qui s'étendent depuis un bord d'attaque BA vers un bord de fuite BF, l'une conforme à une géométrie connue, et l'autre conforme à la présente invention. Par coupe, on entend une section sensiblement transversale de la pale 30 à une hauteur donnée, en particulier suivant une ligne de courant.

On comprendra que la pale 30 présente cette géométrie au moins au voisinage de l'échasse 32 (extrémité proximale de la pale 30, i.e. hauteur de la coupe proche de 0), mais pas nécessairement en partie supérieure, en s'approchant de son extrémité distale. Avantageusement, la pale 30 présente cette géométrie sur moins de 5% de sa hauteur, avantageusement environ 2% de sa hauteur.

Il est à noter sur la figure 4 la « corde » c'est-à-dire la ligne droite qui relie les points extrémaux (BA et BF) de la coupe. Cette corde servira comme on le verra plus loin de repère pour situer des points le long de la coupe pour caractériser la présente géométrie. On voit également sur cette figure 4 une ligne médiane, le « squelette » de la pale 30 (On rappelle que le squelette est la ligne reliant le bord d'attaque BA au bord de fuite BF qui se situe à égale distance entre l'intrados et l'extrados). Orthogonalement à une coupe, on trouve la « hauteur » de la pale 30 susmentionnée.

La position d'un point de la coupe est exprimée en fonction de la longueur de corde (en abscisse), et plus précisément la longueur de corde « normalisée », c'est-à-dire exprimée entre 0 et 1 lorsque l'on traverse la pale 2, à parcourir pour atteindre la projection (orthogonale) de ce point sur la corde. Cela correspond en d'autres termes à la coordonnée x qu'aurait un point de la coupe dans un repère orthonormé dans lequel le point BA aurait (0,0) comme coordonnées, et le point BF (0,1). Par exemple, un point de la coupe associé à une longueur de corde normalisée de « 0,5 » est sur la médiatrice de la corde.

Dans ce repère, la coordonnée y définit la distance d'un point avec la corde (distance entre ce point et sa projection orthogonale sur la corde). Pour un point du squelette, cette distance est appelée la flèche. Le point du squelette le plus éloigné de la corde présente ainsi la flèche maximale. La figure 4 représente ainsi la flèche maximale d'un profil connu et la flèche maximale d'un profil conforme à la présente invention. On désigne communément par flèche maximale (par raccourci) le point du squelette présentant la flèche la plus grande du profil.

Comme l'on voit sur cette figure, l'innovation ici consiste à repousser la flèche maximale de la pale 30 (i.e. le point du squelette présentant la flèche la plus grande du profil) vers l'aval. Plus précisément, là où l'état de la technique situait la flèche maximale aux alentours de 40% de corde, la présente géométrie de pale 30 la situe au-delà de 55% de corde.

En d'autres termes, la flèche maximale est associée à une position le long d'une corde du profil s'étendant du bord d'attaque BA au bord de fuite BF de la pale 30 correspondant à une longueur relative de corde d'au moins 55%. Avantageusement, la flèche étant maximale sur le squelette plutôt côté aval de l'aube au regard du flux, la courbure de l'aube est maximale vers l'aval de l'aube, avec un déport vers le bord de fuite, en considérant cette courbure à proximité des plateformes de la soufflante, au raccordement des échasses et des aubes. Le rapport de moyeu est favorable en ayant ladite courbure au raccordement des échasses et des pales, en considérant des plateformes au plus près du disque en particulier côté aval.

Dans le cadre de l'aube en composite tissée, la géométrie selon l'invention permet d'adoucir et répartir les courbures au plus proche de l'axe de rotation, dès le raccordement entre échasse et pale dans le flux. En effet, les courbures importantes ou franches sont plus complexes à réaliser dans le cadre d'aubes en composite avec matrice tissée que dans le cadre d'aubes métalliques.

En termes mathématiques, cela signifie que dans le repère orthogonal tel que BA a (0,0) et BF (0,1) comme coordonnées, l'équation du squelette est donnée par une fonction *f* définie sur l'intervalle [0; 1] telle que *f*(0) = *f*(1) = 0 et ∃*x_{flecheMAX}* ∈ [0,55; 1], ∀*x* ∈ [0; 1]*, f*(*x_{flecheMAX}*) ≥ *f*(*x*).

Il est à noter que le squelette est généralement une fonction croissante puis décroissante en termes de flèche. La flèche maximale correspond donc à une tangente au squelette parallèle à la corde, i.e. *f'*(*x_{flecheMAX}*) = 0.

De façon avantageuse, la flèche maximale est associée à une position correspondant à une longueur relative de corde comprise entre 55% et 75%, voire entre 55% et 65%. On constate en effet que les meilleurs effets (voir plus loin) sont obtenus autour de 60%.

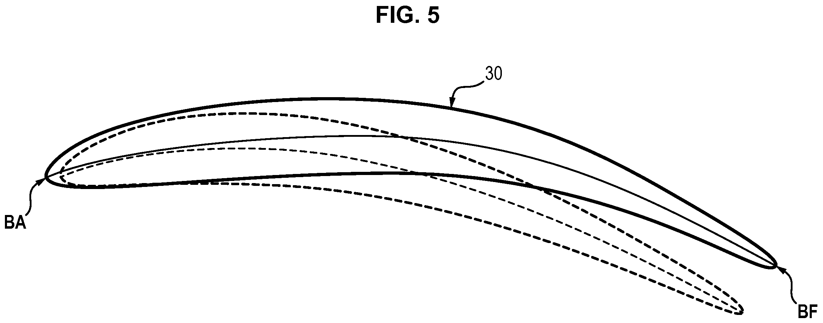

La figure 5 compare un profil à faible rapport de moyeu suivant l'état de l'art actuel et un profil conforme à la présente aube 3 « calés ». On constate que le renvoi de la flèche maximale au-delà de 55% de corde permet de limiter le déport intrados du bord de fuite BF qui pénalise fortement le dessin de l'échasse. Ceci permet à la fois de conserver la déviation du profil qui donne le taux de compression de la coupe et de se raccorder de manière satisfaisante au pied 31 à profil axial par l'intermédiaire de l'échasse 32. Plus précisément, la présente géométrie permet de mieux répartir une cambrure le long de la corde.

Ainsi, la présente solution permet de conserver les angles squelettes en bord d'attaque et en bord de fuite (et donc le taux de compression) de géométries de pales 30 qui étaient trop courbées pour un pied 31 à profil axial.

Selon un deuxième aspect, l'invention concerne une soufflante 2 comprenant un disque 4 (le spinner) et une ou plusieurs aubes (avantageusement disposées régulièrement). De façon préférée, comme expliqué le pied 31 de chaque aube 3 s'insère axialement par translation dans une alvéole 40 du disque 4.

On comprend que seules les pales 30 dépassent de la surface du disque 4 et du volume déterminé par les plateformes, les échasses 32 étant disposée côté intérieur des plateformes de sorte à ne pas dépasser à ne pas être en contact du fluide à comprimer. Ainsi, chaque échasse s'étend à l'extérieur du disque 4 et côté intérieur de plateformes définissant l'intérieur de la veine.

Est également proposé une turbomachine 1 à double flux équipé d'une telle soufflante 2.

## Revendications

1. Aube (3) de soufflante (2) de turbomachine (1) à double flux, comprenant au moins une échasse (32) et une pale (30) présentant un bord d'attaque (BA) et un bord de fuite (BF), laquelle aube présente, pour au moins un profil de la pale (30) au voisinage de l'échasse (32), une flèche maximale définissant un point d'un squelette du profil s'étendant du bord d'attaque (BA) au bord de fuite (BF) de la pale (30) au niveau duquel une distance avec une corde du profil s'étendant du bord d'attaque (BA) au bord de fuite (BF) de la pale (30) est maximale, **caractérisée en ce que** ladite flèche maximale est associée à une position le long de ladite corde correspondant à une longueur relative de corde d'au moins 55%, avec déport de cette flèche maximale vers le bord de fuite.

2. Aube selon la revendication 1, dans laquelle ladite position le long de la corde du profil associée à la flèche maximale correspond à une longueur relative de corde comprise entre 55% et 75%.

3. Aube selon la revendication 2, dans laquelle ladite position le long de la corde du profil associée à la flèche maximale correspond à une longueur relative de corde comprise entre 55% et 65%.

4. Aube selon l'une des revendications 1 à 3, étant en un matériau composite tissé.

5. Aube selon l'une des revendications 1 à 4, comprenant en outre un pied (31) droit relié à la pale (30) via l'échasse (32).

6. Soufflante (2) pour une turbomachine (1) à double flux comprenant au moins une aube (3) selon l'une des revendications 1 à 5.

7. Soufflante selon la revendication 6, comprenant un disque (4) à partir duquel ladite aube (3) s'étend sensiblement radialement.

8. Soufflante selon la revendication 7, dans lequel l'échasse (32) s'étend à l'extérieur du disque (4) et côté intérieur de plateformes définissant l'intérieur de la veine.

9. Soufflante selon l'une des revendications 7 et 8, dans lequel l'aube est conforme à la revendication 5, le pied (31) de l'aube (3) s'insérant axialement dans une alvéole (40) du disque (4).

10. Soufflante (2) selon l'une des revendications 7 à 9 comprenant une pluralité d'aubes (3) selon l'une des revendications 1 à 4 disposées régulièrement sur une circonférence du disque (4).

11. Turbomachine (1) à double flux comprenant une soufflante (2) selon l'une des revendications 6 à 10.

## Patentansprüche

1. Schaufel (3) eines Ventilators (2) einer Doppelstrom-Turbomaschine (1), umfassend mindestens einen Stelzenteil (32) und einen Flügel (30), der eine Anströmkante (BA) und eine Abströmkante (BF) aufweist, wobei die Schaufel für mindestens ein Profil des Flügels (30) in der Umgebung des Stelzenteils (32) einen maximalen Durchhang aufweist, der einen Punkt eines Skeletts des Profils definiert, das sich von der Anströmkante (BA) zu der Abströmkante (BF) des Flügels (30) erstreckt, auf dessen Höhe ein Abstand mit einer Sehne des Profils, die sich von der Anströmkante (BA) zu der Abströmkante (BF) des Flügels (30) erstreckt, maximal ist, **dadurch gekennzeichnet, dass** der maximale Durchhang einer Position entlang der Sehne zugeordnet ist, die einer relativen Länge der Sehne von mindestens 55 % entspricht, mit einem Versatz dieses maximalen Durchhangs zu der Abströmkante hin.

2. Schaufel nach Anspruch 1, wobei die Position entlang der Sehne des Profils, die dem maximalen Durchhang zugeordnet ist, einer relativen Länge der Sehne entspricht, die zwischen 55 % und 75 % beträgt.

3. Schaufel nach Anspruch 2, wobei die Position entlang der Sehne des Profils, die dem maximalen Durchhang zugeordnet ist, einer relativen Länge der Sehne entspricht, die zwischen 55 % und 65 % beträgt.

4. Schaufel nach einem der Ansprüche 1 bis 3, wobei sie aus einem Verbundwerkstoffgewebe hergestellt ist.

5. Schaufel nach einem der Ansprüche 1 bis 4, weiter umfassend einen geraden Fuß (31), der mit dem Flügel (30) über den Stelzenteil (32) verbunden ist.

6. Ventilator (2) für eine Doppelstrom-Turbomaschine (1), umfassend mindestens eine Schaufel (3) nach einem der Ansprüche 1 bis 5.

7. Ventilator nach Anspruch 6, umfassend eine Scheibe (4), von der ausgehend sich die Schaufel (3) im Wesentlichen radial erstreckt.

8. Ventilator nach Anspruch 7, wobei sich der Stelzenteil (32) außerhalb der Scheibe (4) und auf der Innenseite von Plattformen erstreckt, die das Innere der Strömungsbahn definieren.

9. Ventilator nach einem der Ansprüche 7 und 8, wobei die Schaufel dem Anspruch 5 entspricht, wobei sich der Fuß (31) der Schaufel (3) axial in eine Aushöhlung (40) der Scheibe (4) einfügt.

10. Ventilator (2) nach einem der Ansprüche 7 bis 9, umfassend eine Vielzahl von Schaufeln (3) nach einem der Ansprüche 1 bis 4, die regelmäßig auf einem Umfang der Scheibe (4) angeordnet sind.

11. Doppelstrom-Turbomaschine (1), umfassend einen Ventilator (2) nach einem der Ansprüche 6 bis 10.

## Claims

1. Fan (2) blade (3) of a bypass turbine engine (1), comprising at least one shank (32) and a vane (30) having a leading edge (BA) and a trailing edge (BF), which blade has, for at least one aerofoil of the vane (30) in the vicinity of the shank (32), a maximum camber defining a point of a skeleton of the aerofoil extending from the leading edge (BA) to the trailing edge (BF) of the vane (30) at which a distance with a chord of the aerofoil extending from the leading edge (BA) to the trailing edge (BF) of the vane (30) is maximum, **characterised in that** said maximum camber is associated with a position along said chord corresponding to a relative chord length of at least 55%, with an offset of this maximum camber toward the trailing edge.

2. Blade according to claim 1, wherein said position along the chord of the aerofoil associated with the maximum camber corresponds to a relative chord length comprised between 55% and 75%.

3. Blade according to claim 2, wherein said position along the chord of the aerofoil associated with the maximum camber corresponds to a relative chord length comprised between 55% and 65%.

4. The blade according to one of claims 1 to 3, being made of a woven composite material.

5. Blade according to one of claims 1 to 4, further comprising a straight root (31) connected to the vane (30) by means of the shank (32).

6. Fan (2) for a bypass turbine engine (1) comprising at least one blade (3) according to one of claims 1 to 5.

7. Fan according to claim 6, comprising a disk (4) from which said blade (3) extends substantially radially.

8. Fan according to claim 7, wherein the shank (32) extends outside the disk (4) and on the inside of platforms defining the interior of the stream.

9. Fan according to one of claims 7 and 8, wherein the blade conforms to claim 5, the root (31) of the blade (3) being inserted axially into a pocket recess (40) of the disk (4).

10. Fan (2) according to one of claims 7 to 9, comprising a plurality of blades (3) according to one of claims 1 to 4 positioned regularly over a circumference of the disk (4).

11. Bypass turbine engine (1) comprising a fan (2) according to one of claims 6 to 10.
